# EUROPÄISCHE PATENTSCHRIFT

(11) **EP 1 402 981 B1**
(45) Veröffentlichungstag und Bekanntmachung des Hinweises auf die Patenterteilung: **14.11.2007**
(21) Anmeldenummer: 03021182.5
(22) Anmeldetag: 24.09.2003
(51) Int. Cl.: B23C 3/18, B23C 3/30, B23C 5/12

(54) **Verfahren und Vorrichtung zum Herstellen von Gabelfüssen von Turbinenschaufeln**
Method and device for manufacturing a fork-shaped foot of a turbine blade
Procédé et dispositif de fabrication d'un pied d'une pale de turbine en forme de fourchette

(30) Priorität: 27.09.2002 DE 10245197
(43) Veröffentlichungstag der Anmeldung: 31.03.2004
(73) Patentinhaber: WALTER AG, 72072 Tübingen (DE)
(72) Erfinder: Wetli, Markus, 5606 Dintikon (CH)
(74) Vertreter: Rüger, Barthelt & Abel Patentanwälte

(56) Entgegenhaltungen:
- DE-A- 19 942 542
- US-A- 5 676 505
- US-A- 5 931 616

## Beschreibung

Die Erfindung betrifft ein Verfahren zum Fräsen von tiefen Nuten zur Herstellung von Gabelfüßen von Turbinenschaufeln mit einem Grundabschnitt und mehreren zueinander parallelen Wänden.

Größere Turbinen, beispielsweise Dampfturbinen, weisen einen Rotor auf, der eine Vielzahl von Schaufeln trägt. Diese sind in entsprechenden in der Rotorwelle vorgesehenen Nuten gehalten. Eine Bauform der Turbinenfüße ist die der so genannten Gabelfüße. Diese weisen mehrere zueinander im Wesentlichen parallele Wände auf, zwischen denen tiefe Nuten ausgebildet sind. Mit diesen, auch als Finger bezeichneten, Wänden sitzt der Schaufelfuß in entsprechenden Nuten der Rotorwelle.

Bei einem bisherigen Herstellungsverfahren der Schaufelfüße werden die Nuten in einer ersten Arbeitsstation zunächst mit einem Fräswerkzeug vorgeschruppt, das durch eine Reihe drehfest miteinander verbundener, auf einer gemeinsamen Welle sitzender HSS-Scheibenfräser gebildet wird. Dabei sind Schnittgeschwindigkeiten von 20 m/min erreichbar, was Vorschubgeschwindigkeiten von 10 bis 12 mm/min entspricht. Bei einem Schaufelfuß, dessen Nuten eine Tiefe zwischen 50 mm und 120 mm aufweisen können, ergibt sich eine bis zu zehnminütige Bearbeitungszeit allein für das Öffnen der Nuten.

In einem zweiten Arbeitsschritt werden die vorgeschruppten Nuten dann wiederum mit einem Fräswerkzeug geschlichtet. Dieses Fräswerkzeug weist eine Reihe scheibenförmiger, auf einer Welle gehaltener Schlichtfräser auf. Beide Vorgänge werden in separaten Stationen durchgeführt, die die Turbinenschaufel nacheinander durchläuft.

Es ist zu wünschen, die Bearbeitungszeit zu verkürzen.

Aus der DE 44 31 841 C2 ist das Fräsen tiefer Nuten in Generator- oder Turbinenrotoren in einem zweischrittigen Verfahren bekannt. Der Turbinenrotor weist relativ tiefe Nuten auf, die der Aufnahme von Wicklungen dienen. Die Nuten werden einzeln jeweils mit einem Scheibenfräser geöffnet, der an seinem Umfang Schruppschneiden und an den Seiten Schlichtschneiden trägt. Obwohl die Nuten hier zweischrittig geöffnet werden, ist die Schruppbearbeitung und die Schlichtbearbeitung in jedem Schritt kombiniert.

Die Länge der Nuten übertrifft ihre Tiefe bei Weitem. Damit können dem Fräser vorausliegende und hinter dem Fräser liegende Teile der Nutwand, die im Fräsprozess befindliche Nutwand stabilisieren. Außerdem wird jede Nutwand jeweils nur an einer Flanke bearbeitet.

Aus der US-A-5676505 ist ein Verfahren zum Öffnen von Rotornuten eines Generatorrotors bekannt. Die Rotornuten dienen der Aufnahme der Rotorwicklung. Sie werden in die zylindrische Mantelflache des Rotors in Längsrichtung eingebracht. Die Öffnung der Rotornut erfolgt in drei Schritten mit nacheinander in Einsatz zu bringenden Scheibenfräsern. Die zwischen den einzelnen Rotornuten verbleibenden Wände weisen eine erhebliche Stärke auf und erstrecken sich über die gesamte Länge des Rotors.

Aus der DE-A-19942542 ist die Herstellung einer Schwungscheibe einer Brennkraftmaschine mittels Scheibenfräser bekannte, wobei auf einer gemeinsamen antreibenden Fräserwelle mehrere Scheibenfräser in axialem Abstand zueinander angeordnet sind. Die insgesamt vier Scheibenfräser werden mit dem Außenumfang des Schwungscheibenrohlings in Eingriff gebracht und erzeugen somit jeweils vier relativ flache Nuten. Ist dies vollbracht, wird die Schwungscheibe um ein definiertes Winkelmaß fortgedreht, wonach der vorbeschriebene Vorgang wiederholt wird. Dies setzt sich so lange fort bis die Schwungscheibe an ihrem gesamten Umfang genutet ist.

Es ist Aufgabe der Erfindung ein Verfahren zum Fräsen tiefer Nuten zur Herstellung mehrerer zueinander paralleler Wände an einem Werkstück zu schaffen, das eine verkürzte Bearbeitungszeit aufweist. Insbesondere soll sich das Verfahren zur Herstellung von Gabelfüßen von Turbinenschaufeln eignen.

Diese Aufgabe wird mit einem Verfahren nach Anspruch 1 gelöst: Vorteilhafte Weiterbildungen der Erfindung sind Gegenstand der Unteransprüche.

Das erfindungsgemäße Verfahren beruht auf der gleichzeitigen Öffnung mehrerer zueinander paralleler tiefer Nuten mit mehreren, auf einer gemeinsamen Welle sitzenden Scheibenfräsern, die den Schruppvorgang und den Schlichtbearbeitungsvorgang durchführen. Bei der Herstellung von Gabelfüßen beträgt die Nuttiefe in der Regel 30 mm bis 120 mm, wobei die Füße allenfalls 40 mm bis 350 mm lang sind. Die zwischen den Nuten verbleibenden, auch Finger genannten Wände, weisen bei einer Nutbreite von 8 mm bis 25 mm in der Regel eine Dicke von lediglich 2,5 mm bis 12 mm auf. Naturgemäß weisen die Finger eine erhebliche Flexibilität auf, die die präzise Bearbeitung der Nutflanken erschwert. Bei der erfindungsgemäßen Bearbeitung findet jedoch der Schruppbearbeitungsvorgang und der Schlichtbearbeitungsvorgang aller Nutwände durch die am Außenumfang der Scheibenfräser befindlichen Schneiden in unmittelbarer Nachbarschaft des vollen Materials statt. Elastische Wandverbiegungen, d.h. das Ausweichen der Wand vor der Schneide ist hier nicht zu befürchten. Wenn die Scheibenfräser gestuft ausgebildet sind, finden Schrupp- und Schlichtbearbeitungsvorgänge jeweils an sich an den Nutwänden ausbildenden Stufen oder Schultern statt, d.h. immer im Übergang zu der jeweils größeren Wandstärke. Damit kann der Schlichtvorgang an einer stabileren Wand ausgeführt werden als es der Fall wäre, wenn die Nuten zunächst vollständig geöffnet und erst dann geschlichtet würden. Trotz zeitgleich zum Schlichten stattfindenden Schruppbearbeitungsvorgangs, kann somit die Schnittgeschwindigkeit auf ungefähr 80 m/min erhöht werden. Dies ergibt Vorschubgeschwindigkeiten von bis zu 100 mm/min Die Bearbeitungsdauer eines Gabelfußes kann somit, gegenüber bekannten Verfahren, wesentlich reduziert werden.

Das Verfahren lässt sich außerdem bei Werkstücken anwenden, bei denen die durch Nuten zu trennenden Wände in einer parallel zu dem Nutboden gemessenen Richtung gleichlang oder kürzer sind als die Höhe der Wände, gemessen rechtwinklig zum Nutboden. Derartige kurze Wände sind äußerst flexibel und somit kritisch zu bearbeiten. Es zeigt sich aber überraschenderweise, dass sich durch die gleichzeitige Bearbeitung aller Wände eine Abstützung der Wände an den Werkzeugen ergibt, die ein Schwingen oder Ausweichen der Wände verhindert. Die Abstützung ist dabei so gut, dass ein gutes Schlichtergebnis erreicht wird.

Bei dem erfindungsgemäßen Verfahren werden alle zu erzeugenden Nuten in einem einzigen Arbeitsgang erzeugt. Dadurch werden die oben genannten Vorteile in besonderem Maße erreicht. Die Vorschubrichtung des Fräswerkzeugs ist vorzugsweise parallel zu dem Nutboden festgelegt. Dadurch ergibt sich von vornherein ein ebener Nutboden. Es sind jedoch auch Zustellbewegungen rechtwinklig zu dem Nutboden evtl. kombiniert mit einer Parallelbewegung zu dem Nutboden möglich.

Die Relativbewegung zwischen dem Fräswerkzeug und dem Werkstück kann sowohl mit als auch gegen die Fräsrichtung orientiert sein. Es wird die Bewegung mit der Fräsrichtung bevorzugt (Gleichlauf), um fragile Wände nicht zu beschädigen.

Bei der Herstellung von Gabelfüßen von Turbinenrotoren werden die voneinander weg weisenden Außenflächen des Gabelfußes, die an den voneinander am weitesten entfernten Fingern ausgebildet sind, in einem separaten Bearbeitungsvorgang mit Scheibenfräsern erzeugt, die mit Hartmetallschneideinsätzen bestückt sind. Auch diese Scheibenfräser führen sowohl die Schruppbearbeitung als auch die Schlichtbearbeitung durch. Bevorzugterweise erfolgt die gesamte Bearbeitung des Gabelfußes in einem zweistufigen Prozess, in dessen erster Stufe die vorgenannte Bearbeitung der Außenflächen des Gabelfußes stattfindet. In der zweiten Stufe findet das Öffnen und Schlichten der Nuten statt. Die Bearbeitung der Außenflächen erfolgt somit am vollen Material, aus dem erst im nachfolgenden Schritt die Finger durch Einfräsen tiefer Nuten ausgebildet werden. Es lassen sich auf diese Weise in einem wenig zeitaufwendigen Verfahren, präzise Gabelfüße fertigen.

Das erfindungsgemäße Verfahren wird mit einem Fräswerkzeug umgesetzt, das mehrere auf einer gemeinsamen Welle angeordnete Scheibenfräser aufweist. Diese sind jeweils mit mehreren Hartmetallschneideinsätzen bestückt, die gleichzeitig mit dem Werkstück in Eingriff zu bringen sind. Die Schneideinsätze legen an dem Scheibenfräser am Umfang Schruppschneiden und an den Flanken Schlichtschneiden fest. Sie können im Querschnitt gestuft ausgebildet sein, so dass sich weitere Schrupp- und Schlichtschneiden jeweils an Ringschultern jedes Scheibenfräsers ergeben. Der Scheibenradius ist größer als die Nuttiefe. Vorzugsweise ist er auch größer als die Nutlänge. Dies hat den Vorteil, dass bei einer geradlinigen Relativbewegung zwischen Werkzeug und Werkstück parallel zu dem zu erzeugenden Nutboden die Vortriebsrichtung, mit der sich der Fräser in das volle Material einarbeitet, in einem nicht sehr spitzen Winkel zu dem Nutboden erfolgt. Dies ist aus schwingungstechnischer Sicht günstig und erbringt ein gutes Arbeitsergebnis.

Die folgenden Weiterbildungen sind nicht Gegenstand der Ansprüche.

Die Scheibenfräser sind untereinander vorzugsweise gleich ausgebildet und starr mit der Welle verbunden. Bedarfsweise können die Scheibenfräser zur Erzeugung anderweitiger Nutprofile auch unterschiedlich ausgebildet sein.

Die Scheibenfräser sind vorzugsweise in miteinander übereinstimmender Ausrichtung an der Welle gehalten. Dadurch ist jedem Schneideinsatz jedes Scheibenfräser jeweils ein Schneideinsatz des anderen Scheibenfräsers in Axialrichtung benachbart. Die betreffenden Schneideinsätze stützen die fragile freigestellte Wand zwischen einander ab.

In Einzelfällen kann es auch zweckmäßig sein, einen Winkelversatz zwischen benachbarten Scheibenfräsern vorzusehen, etwa um Schwingungen zu reduzieren.

Zur Bearbeitung der Außenflächen eines Gabelfußes kann ein gesondertes Fräswerkzeug vorgesehen werden, das lediglich zwei Scheibenfräser aufweist, die mit Hartmetall-Schneideinsätzen bestückt sind. Den Scheibenfräser ist vorzugsweise eine Einstellvorrichtung zur Einstellung des Axialabstands zugeordnet. Damit kann die Position der Außenflächen des Gabelfußes in Bezug auf einander genau festgelegt werden.

Das Fräswerkzeug für die Außenflächen des Gabelfußes und das Fräswerkzeug für dessen Nuten bilden einen Werkzeugsatz, der zur Bearbeitung eines Gabelfußes dienen kann. Die entsprechende Fräsmaschine weist zwei Bearbeitungsstationen auf, nämlich für jedes Werkzeug des Werkzeugsatzes eine. Die Bearbeitung von Gabelfüßen ist somit auf herkömmlichen Fräsmaschinen mit zwei Bearbeitungsstationen durchführbar. Die erste Bearbeitungsstation, die bei Verwendung von HSS-Werkzeugen dem Öffnen der Nuten diente, dient nun der Bearbeitung der Außenflächen. Die zweite Bearbeitungsstation, die zuvor die Schlichtbearbeitung zu übernehmen hatte, dient nun dem Öffnen und Schlichten aller Nuten. Es wird allerdings eine wesentlich verkürzte Bearbeitungszeit erreicht.

Vorteilhafte Einzelheiten von Ausführungsformen der Erfindung ergeben sich aus der Zeichnung, aus der Beschreibung oder aus Unteransprüchen. In der Zeichnung ist die Erfindung anhand eines Ausführungsbeispiels erläutert. Es zeigen:
- Figur 1: eine Turbinenschaufel mit einem Gabelfuß,
- Figur 2: den Gabelfuß in einer Vorderansicht und in ausschnittsweiser Darstellung,
- Figur 3: die Herstellung des Gabelfußes in einem Fräsvorgang in schematisierter Darstellung,
- Figur 4: die Bearbeitung der Außenflanken des Gabelfußes in schematischer Darstellung,
- Figur 5: die Bearbeitung der Nuten des Gabelfußes in schematisierter Darstellung und
- Figur 6: eine Vorrichtung zur Einstellung des Axialabstands von Scheibenfräsern.

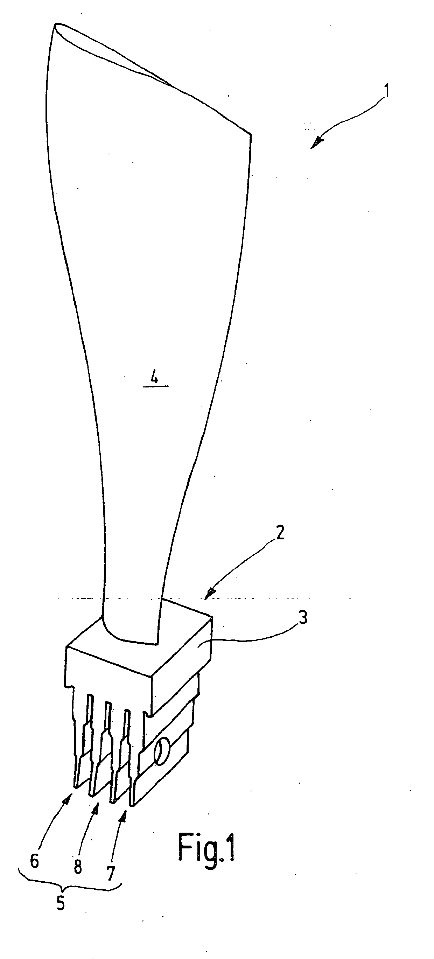

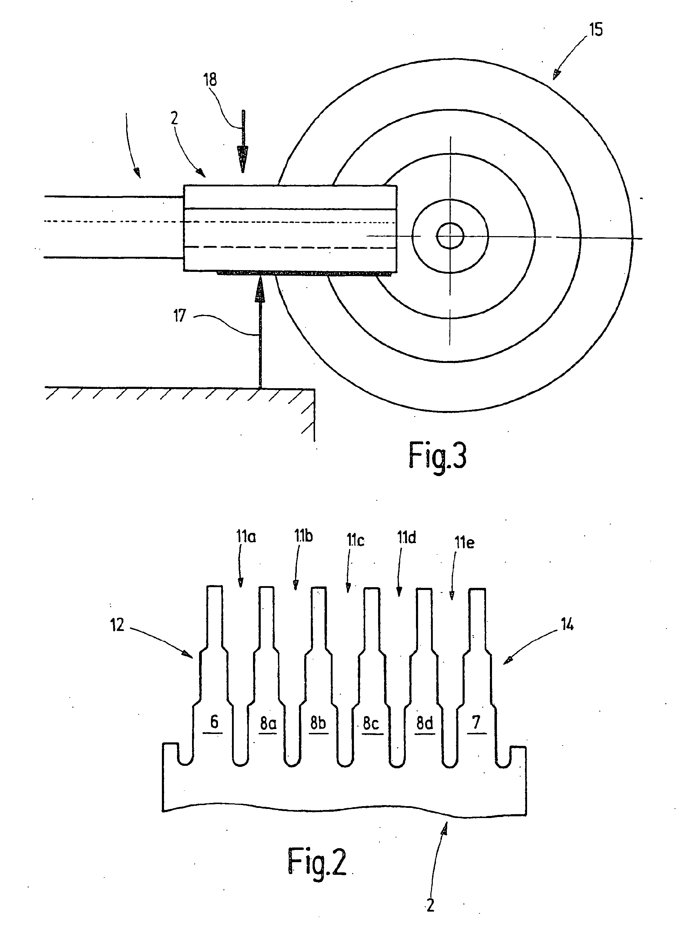

In Figur 1 ist eine Turbinenschaufel 1 veranschaulicht, die einen Gabelfuß 2 aufweist. Dieser dient der Befestigung der Turbinenschaufel 1 an einer Turbinenwelle, die entsprechende Aufnahmenuten aufweist. Der Gabelfuß 2 weist einen etwa quaderförmigen Grundabschnitt 3 auf, von dessen flacher Oberseite sich das Turbinenblatt 4 weg erstreckt. Auf der gegenüber liegenden Seite trägt der Grundabschnitt 3 mehrere, beispielsweise vier oder sechs, Wände 5. Diese sind parallel zueinander in einer Reihe angeordnet, so dass sich außenstehende Wände 6, 7 und dazwischen angeordnete Wände 8 ergeben. Die Wände 5 sind untereinander vorzugsweise gleich ausgebildet. Sie können eine Höhe von 30 mm bis 100 mm oder 120 mm aufweisen. In der,Länge messen sie je nach Ausführungsform 40 mm bis 350 mm. Die Wände 5 werden auch als Finger bezeichnet. Figur 2 veranschaulicht einen sechsfingrigen Gabelfuß 2. Wie aus Figur 2 ersichtlich, können die Wände 5 jeweils einen gestuften Querschnitt aufweisen. Sie schließen zwischen einander Nuten 11a bis 11e ein. Die Nuten 11a bis 11e sind untereinander gleich ausgebildet. Sie können in der Tiefe gestuft ausgebildet sein. Mit zunehmender Tiefe werden sie somit stufenweise schmaler.

Die außen stehenden Wände 6, 7 sind präzisionsbestimmende Teile. Ihre Außenflächen 12, 14 müssen in Bezug auf ihren Abstand voneinander präzise ausgebildet sein.

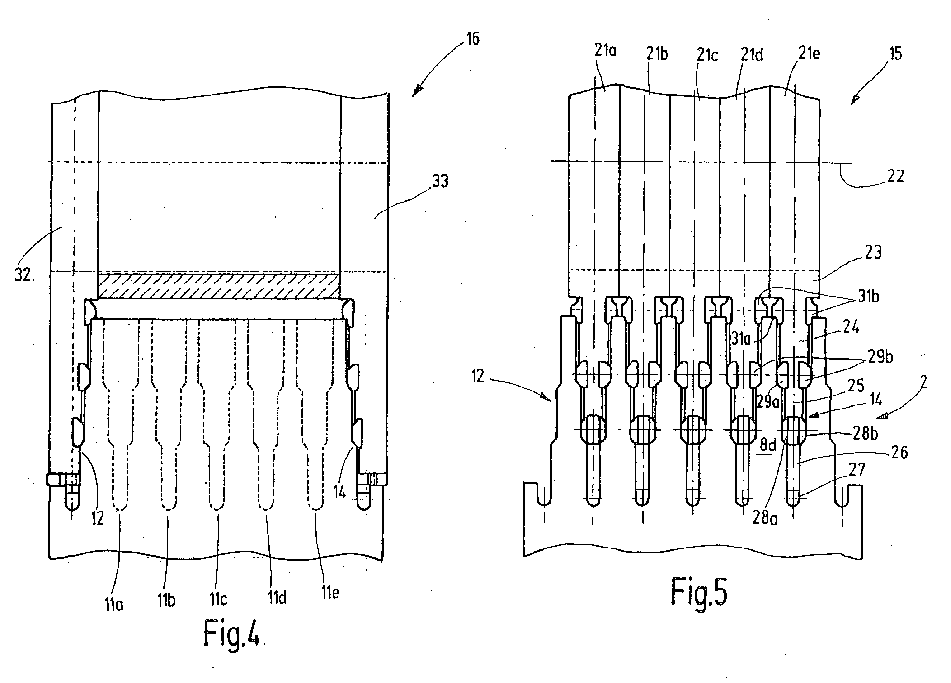

Figur 3 veranschaulicht die Herstellung des Gabelfußes 2 mit Hilfe zweier an späterer Stelle erläuterten Fräswerkzeuge. In Figur 3 ist ein Fräswerkzeug 15 gemäß Figur 5 im Einsatz, das zum Öffnen der Nuten 11a bis 11e dient. Ein zur Bearbeitung der Außenflächen 12, 14 dienendes Fräswerkzeug ist in Figur 4 veranschaulicht und wird ebenfalls an späterer Stelle erläutert.

Zum Fräsen und Fertigbearbeiten der Nuten 11a bis 11e wird der Gabelfuß 2 von einer in Figur 3 lediglich schematisch anhand eines Pfeils 17 angedeuteten Lagereinrichtung (Support) ortsfest gehalten. Sodann wird das drehende Fräswerkzeug 15 auf einem durch einen Pfeil 18 symbolisierten Weg durch das volle Material des Gabelfußes 2 bewegt, um die Nuten 11 zu öffnen.

Figur 5 veranschaulicht das Fräswerkzeug 15. Dieses umfasst für jede Nut 11a bis 11e jeweils einen Scheibenfräser 21a bist 21e, die untereinander gleich ausgebildet sind. Die Scheibenfräser 21a bis 21e sind drehfest auf einer in Figur 5 lediglich schematisch angedeuteten Welle 22 gehalten. Sie liegen mit ihren Flachseiten aneinander an. Ihre Dicke stimmt in Axialrichtung mit der Teilung des Gabelfußes 2 überein. Außerhalb der aneinander anliegenden Nabenabschnitte 23 der Scheibenfräser 21a bis 21e weisen die Scheibenfräser 21a bis 21e Scheibenabschnitte 24, 25, 26 auf. Der radial äußerste Scheibenabschnitt 26 ist dabei in Axialrichtung gemessen schmaler als der Abschnitt 25 der wiederum schmaler als der Abschnitt 24 ist. Jeweils am Außenumfang jedes Abschnitts sowie am Außenumfang des Nabenabschnitts 23 sind Hartmetall-Schneideinsätze 27, 28a, 28b, 29a, 29b, 31a, 31b angeordnet, deren Umfangsschneide der Schruppbearbeitung und deren Axialschneide der Schlichtbearbeitung dient.

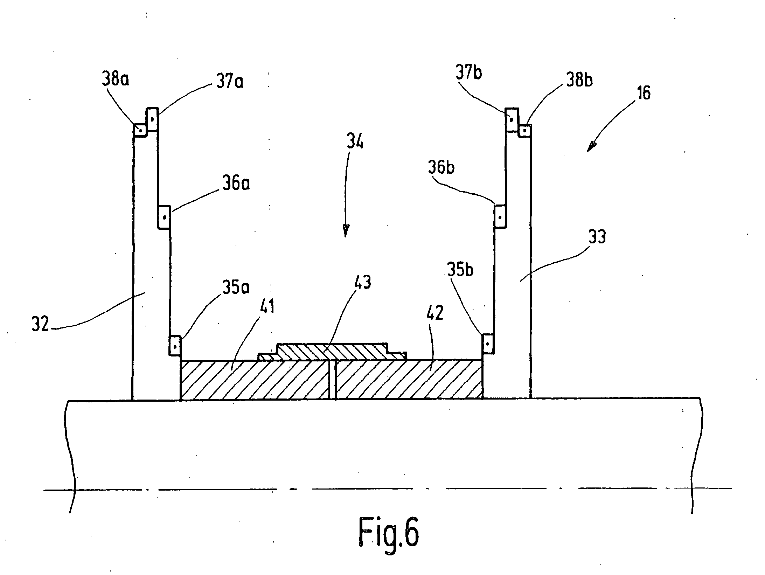

Figur 4 veranschaulicht das Fräswerkzeug 16 für die Bearbeitung der Außenflächen 12, 14. Es beinhaltet zwei Scheibenfräser 32, 33, die auf einer gemeinsamen Welle montiert sind. Die Scheibenfräser 32, 33 sind durch eine aus Figur 6 ersichtliche Einstellvorrichtung 34 auf einstellbarer axialer Distanz gehalten. Die Scheibenfräser 32, 33 weisen auf ihren aufeinander zu weisenden Seiten in entsprechender Abstufung Hartmetalleinsätze 35, 36, 37, 38 auf, die die Kontur der Außenflächen 12, 14 festlegen und bestimmen. Die Scheibenfräser 32, 33 sind vorzugsweise in unterschiedlicher Ausrichtung zueinander orientiert, so dass benachbarte Schneidplatten 35a,-35b zueinander einen Winkelversatz zu der Drehachse aufweisen. Entsprechendes gilt für die Fräser 21a bis 21e. Dies vermeidet die Entstehung störender Schwingungen.

Die Einstellvorrichtung 34 weist zwei mit Außengewinde versehene Buchsen 41, 42 auf, auf die eine Einstellhülse 43 aufgeschraubt ist. Die Gewinde der beiden Buchsen 41, 42 weisen eine unterschiedliche Steigung auf, so dass eine Verdrehung der Einstellhülse 43 gegen die Buchsen 41, 42 eine Änderung der axialen Länge der Einstellvorrichtung 34 bewirkt.

Die Fräswerkzeuge 15, 16 bilden gemeinsam einen Werkzeugsatz, der zum Herstellen eines Gabelfußes 2 wie folgt verwendet wird:

Zur Durchführung eines ersten Arbeitsgangs wird das Fräswerkzeug 16 in einer ersten Arbeitsstation und das Fräswerkzeug 15 in einer zweiten Arbeitsstation mit einer Arbeitsspindel verbunden. Der Rohling der Turbinenschaufel 1 wird dann zunächst in der ersten Arbeitsstation positioniert. Der spätere Gabelfuß wird hier noch durch einen Block vollen Materials gebildet. Dieser wird, wie in Figur 3 ähnlich angedeutet ist, zunächst ortsfest gelagert, wonach das drehende Fräswerkzeug 16 quer zur Längserstreckung des Blatts 4 zugestellt wird. Die Scheibenfräser 32, 33 bearbeiten dabei die Außenflächen 12, 14, wobei die Umfangsschneidkanten der Hartmetallschneideinsätze die Schruppbearbeitung übernehmen. Die Axialschneidkanten übernehmen die Schlichtbearbeitung. Die Außenflächen 12, 14 sind bei ihrer Bearbeitung ortsfest gehalten. Wegen der noch nicht geöffneten, in Figur 4 nur punktiert angedeuteten, Nuten 11 ist der Materialblock noch sehr steif.

Der an seinen Außenflächen 12, 14 fertig bearbeitete Schaufelfuß 2 wird nun zur nächsten Bearbeitungsstation weiter gegeben. Ohne besondere Abstützung der Außenflächen 12, 14 wird nun das Fräswerkzeug 15 zugestellt. Zustellung erfolgt vorzugsweise wiederum quer zur Schaufellängsrichtung, d.h. parallel zum Nutboden der sich öffnenden Nuten 11a bis 11e. Die Schruppbearbeitung erfolgt dabei durch die Schneideinsätze 27 am Nutboden. Hier ist eine vollständig steife Abstützung der Arbeitsbereiche gegeben. Die Schruppbearbeitung der Schneideinsätze 28 erfolgt an relativ dicken Wandbereichen. Die Steifigkeit der Wände ist hier noch sehr hoch. Die Schruppbearbeitung der Schneideinsätze 29 erfolgt in einem schon frei gestellten Bereich der Wände. Das Gesamtzerspanungsvolumen ist hier im Vergleich zum Gesamtvolumen der Nuten gering. Außerdem erfolgt eine Abstützung der Nutwände an dem an der jeweils gegenüber liegenden Wandseite angreifenden Schneideinsatz. Beispielsweise ist die Wand 8d (Figur 5) jeweils zwischen mehreren Schneideinsätzen fixiert. Entsprechendes gilt für die Schneideinsätze benachbarter Scheibenfräser.

Die Hartmetallschneideinsätze gestatten hohe Schnittgeschwindigkeiten und somit hohe Vorschubgeschwindigkeiten. Das Öffnen aller Nuten 11a bis 11e in einem einzigen Arbeitsgang mit Schruppen und Schlichten ergibt eine kurze Bearbeitungszeit. Das zuvorige Schruppen und Fertigbearbeiten der Außenflächen 12, 14 führt zu einer hohen Präzision dieser Flächen, die durch nachträgliche Bearbeitungsschritte beim Öffnen der Nuten 11a bis 11e nicht mehr beeinträchtigt werden kann.

Zur Herstellung von Gabelfüßen 2 von Turbinenschaufeln 1 werden diese in einem ersten Schritt mit zwei starr gekoppelten Scheibenfräsern 32, 33, die mit Hartmetallschneideinsätzen versehen sind, zunächst an ihren Außenflächen 12, 14 in einem einzigen Arbeitsgang geschruppt und geschlichtet. In einem zweiten Arbeitsgang werden die Finger des Gabelfußes hergestellt, indem mit einem Satz starr gekoppelter Scheibenfräser, die mit Hartmetallschneideinsätzen versehen sind, alle Nuten gleichzeitig geöffnet (geschruppt) und geschlichtet werden.

## Patentansprüche

1. Verfahren zur Herstellung von Gabelfüßen (2) von Turbinenschaufeln mit einem Grundabschnitt (3) und mehreren zueinander parallelen Wänden (6, 7, 8a bis 8d), zwischen denen Nuten (11a bis 11e) ausgebildet sind, mittels eines Fräswerkzeuges (15), das mehrere auf einer gemeinsamen Welle (22) angeordnete Scheibenfräser (21) aufweist, die jeweils mit mehreren Hartmetall-Schneideinsätzen (27, 28, 29, 31) bestückt sind und gleichzeitig mit dem Werkstück (2) in Eingriff gebracht werden, wobei mit den Scheibenfräsern (21) in einem einzigen Arbeitsgang zugleich das Öffnen aller zu erzeugender Nuten (11a bis 11e) in einem SchruppBearbeitungsvorgang und das Schlichten der Wände (6, 7, 8a bis 8e) in einem Schlichtbearbeitungsvorgang vorgenommen wird.

2. Verfahren nach Anspruch 1, **dadurch gekennzeichnet, dass** das Fräswerkzeug (15) bei dem Fräsvorgang in einer Vorschubrichtung (18) parallel zu dem Nutboden der zu erzeugenden Nut (11a bis 11e) bewegt wird.

3. Verfahren nach Anspruch 1, **dadurch gekennzeichnet, dass** das Fräswerkzeug (16) bei dem Fräsvorgang in einer Vorschubrichtung (18) winklig zu dem Nutboden der zu erzeugenden Nut (11a bis 11e) bewegt wird.

4. Verfahren nach Anspruch 1, **dadurch gekennzeichnet, dass** das Fräswerkzeug (16) mit der Vorschubrichtung rotiert (Gleichlauf).

5. Verfahren nach Anspruch 1, **dadurch gekennzeichnet, dass** das Fräswerkzeug (16) gegen die Vorschubrichtung rotiert (Gegenlauf).

6. Verfahren nach Anspruch 1, **dadurch gekennzeichnet, dass** die voneinander weg weisenden Außenflächen (12, 14) des Gabelfußes (2) in einem separaten Fräs-Bearbeitungsvorgang mit Scheibenfräsern (32, 33) erzeugt werden, die mit Hartmetall-Schneideinsätzen (35, 36, 37, 38) bestückt sind, und dass in dem separaten Fräs-Bearbeitungsvorgang sowohl die Schrupp-Bearbeitung als auch die Schlichtbearbeitung vorgenommen wird.

7. Verfahren nach Anspruch 6, **dadurch gekennzeichnet, dass** das Herstellen der Nuten (11a bis 11e) und die Herstellung der Außenflächen (12, 14) in zwei aufeinander folgenden Arbeitsgängen erfolgt.

8. Verfahren nach Anspruch 7, **dadurch gekennzeichnet, dass** die Bearbeitung der Außenflächen (12, 14) vor der Herstellung der Nuten (11a bis 11e) erfolgt.

## Claims

1. Process for the production of forked feet (2) of turbine blades with a base section (3) and several parallel walls (6, 7, 8a to 8d), between which grooves (11 a to 11 e) are configured, by means of a milling cutter (15), which has several side milling cutters (21) arranged on a joint shaft (22), which are respectively fitted with several hard metal cutting inserts (27, 28, 29, 31) and at the same time are brought into engagement with the workpiece (2), wherein in a single work cycle all the grooves (11a to 11e) to be generated are made at the same time with the side milling cutters (21) in a rough machining operation and the walls (6, 7, 8a to 8e) are smoothed in a finish-machining operation.

2. Process according to Claim 1, **characterised in that** during the milling operation the milling cutter (15) is moved in a feed direction (18) parallel to the groove base of the groove (11a to 11e) to be generated.

3. Process according to Claim 1, **characterised in that** during the milling operation the milling cutter (16) is moved in a feed direction (18) at an angle to the groove base of the groove (11a to 11e) to be generated.

4. Process according to Claim 1, **characterised in that** the milling cutter (16) rotates with the feed direction (synchronous rotation).

5. Process according to Claim 1, **characterised in that** the milling cutter (16) rotates against the feed direction (counter-rotation).

6. Process according to Claim 1, **characterised in that** the outer faces (12, 14) of the forked foot (2) pointing away from one another are generated in a separate milling operation with side milling cutters (32, 33), which are fitted with hard metal cutting inserts (35, 36, 37, 38), and that both the rough machining operation and the finish-machining operation are performed in the separate milling operation.

7. Process according to Claim 6, **characterised in that** the production of the grooves (11a to 11e) and the production of the outer faces (12, 14) are conducted in two consecutive work cycles.

8. Process according to Claim 7, **characterised in that** the machining of the outer faces (12, 14) is conducted before the production of the grooves (11a to 11e).

## Revendications

1. Procédé de fabrication de pieds fourchus (2) de pales de turbines comprenant une portion de base (3) et plusieurs parois parallèles les unes aux autres (6, 7, 8a à 8d), entre lesquelles sont ménagées des rainures (11a à 11e), à l'aide d'un outil de fraisage (15) comportant plusieurs fraises-disques (21) disposées sur un arbre commun (22), garnies chacune de plusieurs taillants rapportés en métal dur (27, 28, 29, 31) et amenées simultanément en prise avec la pièce (2), les fraises-disques (21) réalisant simultanément, en une seule opération, l'ouverture de toutes les rainures à créer (11a à 11e) lors d'une opération d'usinage de dégrossissage et la finition des parois (6, 7, 8a à 8e) lors d'une opération d'usinage de finition.

2. Procédé selon la revendication 1, **caractérisé en ce que**, lors de l'opération de fraisage, l'outil de fraisage (15) est déplacé dans une direction d'avance (18) parallèle au fond de rainure de la rainure à créer (11a à 11e).

3. Procédé selon la revendication 1, **caractérisé en ce que**, lors de l'opération de fraisage, l'outil de fraisage (16) est déplacé dans une direction d'avance (18) orientée selon un angle par rapport au fond de rainure de la rainure à créer (11a à 11e).

4. Procédé selon la revendication 1, **caractérisé en ce que** l'outil de fraisage (16) tourne dans la direction d'avance (fraisage en avalant).

5. Procédé selon la revendication 1, **caractérisé en ce que** l'outil de fraisage (16) tourne à l'opposé de la direction d'avance (fraisage normal).

6. Procédé selon la revendication 1, **caractérisé en ce que** les surfaces extérieures opposées (12, 14) du pied fourchu (2) sont réalisées lors d'une opération séparée d'usinage par fraisage à l'aide de fraises-disques (32, 33) garnies de taillants rapportés en métal dur (35, 36, 37, 38), et **en ce qu'**aussi bien l'usinage de dégrossissage que l'usinage de finition sont réalisés lors de l'opération séparée d'usinage par fraisage.

7. Procédé selon la revendication 6, **caractérisé en ce que** la réalisation des rainures (11a à 11e) et la réalisation des surfaces extérieures (12, 14) s'effectuent lors de deux opérations successives.

8. Procédé selon la revendication 7, **caractérisé en ce que** l'usinage des surfaces extérieures (12, 14) intervient avant l'usinage des rainures (11a à 11e).
